# EUROPEAN PATENT APPLICATION

(11) **EP 2 261 175 A1**
(43) Date of publication of application: **15.12.2010**
(21) Application number: 09726689.4
(22) Date of filing: 25.03.2009
(51) Int. Cl.: C01B 31/02, H01M 4/58, H01G 9/058

(54) **CARBON MANUFACTURING METHOD**

(30) Priority: 02.04.2008 JP 2008095872
(71) Applicant: Sumitomo Chemical Company, Limited, Tokyo 104-8260 (JP)
(72) Inventor: MURAKAMI, Chikara, Funabashi-shi, Chiba (JP); ARISE, Ichiro, Ikeda-shi Osaka 563-0025 (JP)
(74) Representative: Hart-Davis, Jason
(86) International application number: PCT/JP2009/056783
(87) International publication number: WO 2009/123251

(57) **Abstract**

A process for producing a carbon comprising the first step of polymerizing an alkylphenol with an aldehyde compound to obtain a chained or crosslinked polymer and the second step of heating the obtained polymer at 800 to 980°C under an inert gas atmosphere.

## Description

### Field of the Invention

The present invention relates to a process for producing a carbon.

### Background of the Invention

A carbon is used for materials for electrodes such as electric double layer capacitors, lithium ion capacitors and lithium ion secondary cells. For example, JP 2004-273942 A discloses an electric double layer capacitor using a carbon of which specific surface area is 286 to 1100 m²/g and which was produced from pitch, as a material for the electrode.

### Disclosure of the Invention

The present invention provides:
<1> A process for producing a carbon comprising the first step of polymerizing an alkylphenol with an aldehyde compound to obtain a chained or crosslinked polymer and the second step of heating the obtained polymer at 800 to 980°C under an inert gas atmosphere;
<2> The process according to <1>, wherein the alkylphenol is at least one selected from the group consisting of o-cresol, m-cresol and p-cresol;
<3> The process according to <1> or <2>, wherein the aldehyde compound is formaldehyde;
<4> The process according to any one of <1> to <3>, which further comprises a step of grinding the carbon obtained in the second step;
<5> The process according to any one of <1> to <4>, wherein the alkylphenol is polymerized with the aldehyde compound in the presence of a catalyst;
<6> The process according to any one of <1> to <5>, wherein the polymerization reaction is conducted while standing still;
<7> The process according to any one of <1> to <6>, wherein the obtained chained or crosslinked polymer is used for the second step after washing;
<8> The process according to any one of <1> to <7>, wherein the obtained chained or crosslinked polymer is used for the second step after drying;
<9> The process according to any one of <1> to <8>, wherein the obtained chained or crosslinked polymer is used for the second step after grinding;
<10> The process according to any one of <1> to <9>, wherein the obtained chained or crosslinked polymer is used for the second step after washing and drying;
<11> The process according to any one of <1> to <10>, wherein the obtained chained or crosslinked polymer is used for the second step after washing, drying and further grinding;
<12> The process according to any one of <1> to <11>, wherein the obtained chained or crosslinked polymer is used for the second step after grinding, washing and further drying;
<13> The process according to any one of <1> to <12>, which further comprises a step of heating the chained or crosslinked polymer obtained in the first step at 100 to 400°C under an oxidizing gas atmosphere between the first and the second step.

### Best Modes for Carrying Out the Invention

The first step of the present invention is a step of polymerizing an alkylphenol with an aldehyde compound to obtain a chained or crosslinked polymer.

Examples of the alkylphenol include a phenol having one or two linear, branched chain or cyclic alkyl group having 1 to 12 carbon atoms. Examples of the alkyl group having 1 to 12 carbon atoms include a methyl group, an ethyl group, an isopropyl group, a tert-butyl group, a hexyl group, a cyclohexyl group, an octyl group and a decyl group, and an alkyl group having 1 to 4 carbon atoms is preferable and a methyl group is more preferable.

As the alkyl phenol, a phenol having an alkyl group having 1 to 12 carbon atoms is preferable, and cresol is more preferable. The alkylphenol has isomers, and any one of the isomer may be used for the present invention, and a mixture of the isomers may be used. For example, cresol has three isomers, o-cresol, m-cresol and p-cresol, and any of isomers may be used and a mixture of two or three isomers may be used. When a mixture of the isomers is used, the mixed ratio is not limited.

Examples of the aldehyde compound include an aliphatic aldehyde having 1 to 20 carbon atoms such as formaldehyde, acetaldehyde, propionaldehyde, n-butyraldehyde, isobutyraldehyde, n-hexyl aldehyde, n-dodecyl aldehyde, 3-phenylpropionaldehyde and 5-hydroxypentanal; and an aromatic aldehyde having 7 to 20 carbon atoms such as benzaldehyde, 1-naphthaldehyde, 2-methylbenzaldehyde, 3-methylbenzaldehyde, 4-methylbenzaldehyde, 2-hydroxybenzaldehyde, 3-hydroxybenzaldehyde, 4-hydroxybenzaldehyde, 4-tert-butylbenzaldehyde, 4-phenylbenzaldehyde, 2-methyoxybenzaldehyde, 3-methoxybenzaldehyde, 4-methoxybenzaldehyde, 2-chlorobenzaldehyde, 3-chlorobenzaldehyde, 4-chlorobenzaldehyde, 2-bromobenzaldehyde, 3-bromobenzaldehyde, 4-bromobenzaldehyde, 2-fluorobenzaldehyde, 3-fluorobenzaldehyde, 4-fluorobenzaldehyde, 2-methylthiobenzaldehyde, 3-methylthiobenzaldehyde, 4-methylthiobenzaldehyde, 2-carboxybenzaldehyde, 3-carboxybenzaldehyde, 4-carboxybenzaldehyde, 3-nitrobenzaldehyde, 4-aminobenzaldehyde, 4-acetylaminobenzaldehyde and 4-cyanobenzaldehyde. Among them, preferred is an aliphatic aldehyde having 1 to 20 carbon atoms, more preferred is an aliphatic aldehyde having 1 to 8 carbon atoms, and especially preferred is an aliphatic aldehyde having 1 to 5 carbon atoms.

As the aldehyde compound, its aqueous solution may be used, and its anhydride may be used. Specifically, paraformaldehyde, trioxane or the like may be used as formaldehyde.

As the aldehyde compound, formaldehyde is especially preferable.

The used amount of the aldehyde compound is usually about 0.5 to 3 moles and preferably about 0.8 to 2.5 moles per 1 mole of the alkylphenol.

The polymerization reaction of the alkylphenol and the aldehyde compound is usually carried out in the presence of a solvent. As the solvent, water, a hydrophilic solvent and a mixed solvent thereof are preferable. Herein, "hydrophilic solvent" means a solvent capable of being miscible in any proportion with water. Examples of the hydrophilic solvent include a hydrophilic alcohol solvent such as methanol, ethanol and isopropanol, and a hydrophilic ether solvent such as tetrahydrofuran. As the solvent, a hydrophilic alcohol solvent having 3 or less carbon atoms and a mixed solvent of water and a hydrophilic alcohol solvent having 3 or less carbon atoms preferably, and a hydrophilic alcohol solvent having 3 or less carbon atoms is more preferable.

The used amount of the solvent is usually 0.2 to 10 parts by weight and preferably 1.25 to 5 parts by weight per 1 part by weight of the alkylphenol.

The polymerization reaction of the alkylphenol and the aldehyde compound is usually carried out in the presence of a catalyst. Examples of the catalyst include a basic catalyst such as alkali metal hydroxides such as lithium hydroxide, sodium hydroxide and potassium hydroxide, alkali metal carbonates such as sodium carbonate and potassium carbonate, alkali metal hydrogen carbonate such as sodium hydrogen carbonate, and ammonia, an acidic catalyst such as inorganic acids such as hydrochloric acid, sulfuric acid and phosphoric acid, carboxylic acids such as formic acid, acetic acid and oxalic acid, and sulfonic acids such as p-toluenesulfonic acid. As the basic catalyst, ammonia is preferable, and as the acidic catalyst, carboxylic acids are preferable. Among them, preferred is a basic catalyst, and more preferred is ammonia. When the polymerization reaction is conducted in the presence of a basic catalyst, a crosslinked polymer is usually obtained, and when the polymerization reaction is conducted in the presence of an acidic catalyst, a chained polymer is usually obtained.

The used amount of the catalyst is usually 0.002 to 2 moles, preferably 0.01 to 0.2 mole and more preferably 0.02 to 0.1 mole per 1 mole of the alkylphenol.

The first step is usually carried out by mixing the alkylphenol, the aldehyde compound, the solvent and the catalyst, and the mixing order thereof is not limited. For example, the polymerization reaction may be conducted usually at 0 to 100°C, and preferably at 30 to 90°C by mixing the alkylphenol, the aldehyde compound, the solvent and the catalyst, and the polymerization reaction may be conducted by adding the aldehyde compound to a mixture of alkylphenol, the solvent and the catalyst usually at 0 to 100°C, and preferably at 30 to 90°C. Alternatively, the polymerization reaction may be conducted by adding the alkylphenol to a mixture of the aldehyde compound, the solvent and the catalyst usually at 0 to 100°C, and preferably at 30 to 90°C, and the polymerization reaction may be conducted by adding the catalyst to a mixture of the alkylphenol, the aldehyde compound and the solvent usually at 0 to 100°C, and preferably at 30 to 90°C.

Especially, the polymerization reaction is preferably conducted by adding the aldehyde compound to a mixture of the alkylphenol, the solvent and the catalyst at 30 to 90°C.

During the polymerization reaction, a poor solvent such as water may be added to the reaction mixture.

During the polymerization reaction, a reaction temperature may be arbitrarily changed. The polymerization reaction may be carried out with stirring, or with standing.

The reaction time is usually 1 hour to 10 days.

Thus, the chained or crosslinked polymer is obtained. While the obtained polymer may be used as it is for the second step, the obtained polymer is preferably used for the second step after washing. Alternatively, before or after washing the obtained polymer, it is preferably ground.

For grinding the polymer, conventional grinding machines for fine grinding such as an impact wear grinder, a centrifugal grinder, a ball mill (a tube mill, a compound mill, a conical ball mill, a rod mill and a planetary boll mill), a vibration mill, a colloid mill, a friction disk mill and a jet mill are used. Among them, preferred is a ball mill. When a ball mill is used, balls and grinding vessels made of non-metals such as alumina and agate are preferably used because of avoiding incorporation of metal powders.

The washing of the polymer is usually conducted using water or a hydrophilic solvent. Examples of the hydrophilic solvent include the above-mentioned hydrophilic alcohol solvents, hydrophilic nitride solvents such as acetonitrile, hydrophilic ketone solvents such as acetone, hydrophilic sulfoxide solvents such as dimethyl sulfoxide and hydrophilic carboxylic acid solvents such as acetic acid. The used amount thereof is not limited.

The washed polymer is preferably used for the second step after drying. Examples of the method for drying the polymer include a method for drying the polymer at about 10 to 100°C by ventilation or under reduced pressure, a method for drying the polymer at -70 to 10°C by ventilation or under reduced pressure, and a method for drying the polymer using carbon dioxide or the like under supercritical state.

The polymer obtained by drying may be ground.

The polymer obtained by the polymerization reaction is preferably washed, dried and further ground. Alternatively, the polymer obtained by the polymerization reaction is also preferably ground, washed and further dried.

The second step of the present invention is a step of heating the polymer obtained in the above-mentioned first step at 800 to 980°C under an inert gas atmosphere. Examples of the inert gas include nitrogen and argon. The heating time is usually about 1 minute to 24 hours.

The heating is preferably conducted using a calcining furnace such as a rotary kiln, a roller hearth kiln, a pusher kiln, a multiple-hearth furnace, a fluidized bed furnace and a high-temperature calcining furnace. Especially, the rotary kin is more preferable in viewpoint that much amount of the polymer can easily be heated.

When the calcining furnace is used, for example, the heating is conducted by placing the polymer in the calcining furnace, replacing inner atmosphere of the calcining furnace by an inert gas and then heating at 800 to 980°C.

The polymer obtained in the above-mentioned first step may be used for the second step after heating it at 100 to 400°C under an oxidizing gas atmosphere. Examples of the oxidizing gas include air, H₂O, CO₂, and O₂. The heating time is usually about 1 minute to 24 hours. For the heating, the above-mentioned calcining furnace is usually used. Usually, inner atmosphere of the calcining furnace is replaced by an oxidizing gas, and then, the polymer obtained in the first step is charged in it and it is heated in a range of 100 to 400°C. When the second step is continuously conducted, inner atmosphere of the calcining furnace is replaced by an inert gas, and then it may be heated up to 800 to 980°C.

The carbon obtained in the second step may be ground. Examples of the grinding methods include the same as listed in examples of the grinding step in the first step.

The carbon of the present invention can be used for materials for electrodes in dry batteries, sensor for a piezoelectric devices, electric double-layer capacitors, lithium ion capacitors, lithium ion secondary cells and fuel battery; carriers for supporting catalysts; carriers for chromatography; and adsorbents.

### Examples

The present invention will be illustrated in more detail by Examples bellow, but the present invention is not limited to these Examples.

### Example 1

### (First step)

Into a container, 72.1 parts by weight of cresol containing m-cresol and p-cresol in a ratio of 6/4, 1.53 parts by weight of 29% by weight ammonia water and 37% by weight aqueous formaldehyde solution of which amount became 2 moles of formaldehyde per 1 mole of cresol were mixed. The obtained mixture was diluted with 106 parts by weight of water. The obtained mixture was maintained at 60°C for 30 minutes to conduct a reaction.

The obtained reaction mixture was pulled into a stainless steal vessel, and it was maintained at 80°C for 24 hours to conduct a reaction to obtain a crosslinked polymer. The obtained polymer was roughly ground with a grinder, and then, tert-butyl alcohol was added thereto. The obtained mixture was maintained at 60°C for 1 hour with stirring, and then, filtrated to obtain the ground polymer. The polymer was washed three times with tert-butyl alcohol, and dried at 60°C and at 1.0 kPa for 24 hours under reduced pressure to obtain 86.3 parts by weight of the crosslinked polymer.

### (Second step)

The obtained crosslinked polymer heated in a rotary kiln manufactured by Advantec, Ltd., under an atmosphere of an argon gas at a heating temperature of 975°C for 1 hour to obtain a carbon. The obtained carbon was ground with a ball mill (a ball made of agate at 28 rpm for 5 minutes) to obtain a fine particle of carbon. The specific surface area of the obtained fine particle of the carbon was 16 m²/g.

### Example 2

The fine particle of a carbon was obtained according to the same manner as that described in Example 1 expected the heating temperature was 900°C in the second step. The specific surface area of the obtained fine particle of the carbon was 33 m²/g.

### Example 3

The fine particle of a carbon was obtained according to the same manner as that described in Example 1 expected the heating temperature was 825°C in the second step. The specific surface area of the obtained fine particle of the carbon was 40 m²/g.

### Industrial Applicability

According to the present invention, a carbon having a smaller value of the specific surface area can be obtained, and it can be used for materials for electrodes such as electric double layer capacitors, lithium ion capacitors and lithium ion secondary cells.

## Claims

1. A process for producing a carbon comprising the first step of polymerizing an alkylphenol with an aldehyde compound to obtain a chained or crosslinked polymer and the second step of heating the obtained polymer at 800 to 980°C under an inert gas atmosphere.

2. The process according to claim 1, wherein the alkylphenol is at least one selected from the group consisting of o-cresol, m-cresol and p-cresol.

3. The process according to claim 1 or 2, wherein the aldehyde compound is formaldehyde.

4. The process according to claim 1, which further comprises a step of grinding the carbon obtained in the second step.

5. The process according to claim 1, wherein the alkylphenol is polymerized with the aldehyde compound in the presence of a catalyst.

6. The process according to claim 1, wherein the polymerization reaction is conducted while standing still.

7. The process according to claim 1, wherein the obtained chained or crosslinked polymer is used for the second step after washing.

8. The process according to claim 1, wherein the obtained chained or crosslinked polymer is used for the second step after drying.

9. The process according to claim 1, wherein the obtained chained or crosslinked polymer is used for the second step after grinding.

10. The process according to claim 1, wherein the obtained chained or crosslinked polymer is used for the second step after washing and drying.

11. The process according to claim 1, wherein the obtained chained or crosslinked polymer is used for the second step after washing, drying and further grinding.

12. The process according to claim 1, wherein the obtained chained or crosslinked polymer is used for the second step after grinding, washing and further drying.

13. The process according to claim 1, which further comprises a step of heating the chained or crosslinked polymer obtained in the first step at 100 to 400°C under an oxidizing gas atmosphere between the first step and the second step.
